Europäisches Patentamt

European Patent Office

Office européen des brevets

(19)

(11) Veröffentlichungsnummer: **0 203 259**
.B1

(12) EUROPÄISCHE PATENTSCHRIFT

(45) Veröffentlichungstag der Patentschrift: 08.08.90

(21) Anmeldenummer: 86101474.4

(22) Anmeldetag: 05.02.86

(51) Int. Cl.⁵: **B 01 D 3/38**, B 01 D 1/28, B 01 D 3/14

(54) Verfahren zur Regenerierung eines beladenen Waschmittels.

(30) Priorität: 06.02.85 DE 3504032

(43) Veröffentlichungstag der Anmeldung:
03.12.86 Patentblatt 86/49

(45) Bekanntmachung des Hinweises auf die
Patenterteilung:
08.08.90 Patentblatt 90/32

(84) Benannte Vertragsstaaten:
AT BE DE FR GB NL

(56) Entgegenhaltungen:
EP-A-0 080 808
FR-A-2 482 979
US-A-2 111 822
US-A-3 471 371
US-A-4 566 947

(73) Patentinhaber: Linde Aktiengesellschaft
Abraham-Lincoln-Strasse 21
D-6200 Wiesbaden (DE)

(72) Erfinder: Becker, Hans, Dr.-Ing.
Zwengauer Strasse 9
D-8000 München 71 (DE)
Erfinder: Weiss, Horst
Neufriedenheimer Strasse 37a
D-8000 München 70 (DE)

(74) Vertreter: Schaefer, Gerhard, Dr.
Linde Aktiengesellschaft Zentrale
Patentabteilung
D-8023 Höllriegelskreuth (DE)

**Beschreibung**

Die Erfindung betrifft ein Verfahren zur Regenerierung eines beladenen Waschmittels in einer Regenerierkolonne durch Strippen mit einem Dampf, bei dem nach Kondensation des Dampfes in einem Kondensator die abgestrippten Komponenten abgezogen und das verbleibende Kondensat der Regenerierkolonne wieder zugeführt wird, wobei das Kondensat vor der Einspeisung in die Regenerierkolonne zumindest zum größten Teil wieder verdampft wird.

Bei vielen chemischen und physikalischen Wäschen erfolgt die Regenerierung durch Strippen mit dem Dampf, der z.B. durch Verdampfen einer im Waschmittel enthaltenen Komponente erzeugt wird. In der Praxis wird für diesen Zweck meist Wasserdampf verwendet, z.B. in Prozessen, die mit chemischen Absorbentien wei beispielsweise wäßrigen Lösungen von Alkanolaminen oder Alkalikarbonaten oder mit physilaischen Lösungsmitteln wie Ethern von Polyethylenglykollen arbeiten. Jedoch sind auch andere Stoffe denkbar, wie z.B. Methanol oder Kohlenwasserstoffe.

Die Regenierung wird dabei üblicherweise wie folgt durchgeführt. Die Regenerierkolonne besteht aus zwei Abschnitten. Der untere ist der eigentliche Regenerierabschnitt, der obere dient zur Rückwaschung von im Strippdampf enthaltenen Waschmittelresten. Das beladene Waschmittel wird zwischen beiden Abschnitten aufgegeben. Der zum Strippen notwendige Dampf wird durch Wärmezufuhr im Sumpf erzeugt. Nach Kondensation des Dampfes im Kopfkondensator werden die aus dem Waschmittel abgestrippen Komponenten gasförmig abgezogen. Das verbleibende Kondensat wird als Rücklauf auf den oberen Kolonnenabschnitt aufgegeben und vermischt sich nach Durchlaufen diese Abschnittes mit dem beladenen Waschmittel.

Aus dem US—Patent 3.471.371 ist ein Verfahren bekannt, das sich mit der Regenerierung des beladenen Waschmittels einer Ölwäsche befaßt. Das Waschmittel wird dort in einer Regenerierkolonne durch Strippen mit Wasserdampf von der absorbierten Komponente befreit. Aus dem durch die ausgetriebene Komponente und Wasserdampf gebildeten Gemisch wird die abgestrippe Komponente durch Kondensation des Dampfes entfernt. Das verbleibende Kondensat wird zum größten Teil wieder verdampft und der Regenerierkolonne als Strippdampf zugeführt.

Ein ähnliches Regenerierverfahren ist im US—Patent 2.111.822 beschrieben. Ein mit Öl beladenes Waschmittel wird durch Strippen mit einem Medium ausgetrieben. In einem Separator werden die gebildeten Dämpfe kondensiert, wobei sie unterschiedliche flüssige Phasen aus Strippmedium und Waschmittel bilden. Ein Teil der gebildeten Strippmediumphase wird verdampft und erneut der Regenerierkolonne zugeführt.

Häufig wird ein Teilstrom des Kondensats abgezogen und zur Waschmittelrückwaschung am Kopf des Absorbers verwendet. Nach Durchlaufen dieses Abschnittes vermischt sich das Kondensat ebenfalls mit dem Waschmittel.

Die Mischung des Kondensats mit dem Waschmittel hat die folgenden Nachteile: Die Mischung aus Kondensat und Waschmittel hat einen höheren Siedepunkt als das reine Kondensat, siedet bei gleitender Temperatur und die Temperatur im Regenerierabschnitt liegt merklich unter der Sumpftemperatur. Die Siedepunktserhöhung und die Temperaturdifferenz zwischen Regenerierabschnitt und Sumpftemperatur hängen stark von dem jeweiligen System ab. In üglichen Anwendungsfällen beträgt die Siedepunktserhöhung bis zu 30°C oder sogar noch mehr, die Temperaturdifferenz bis zu 10°C.

Der Erfindung liegt daher die Aufgabe zugrunde, ein Verfahren der eingangs genannten Art so zu verbessern, daß die aufgeführten Nachteile auf einfache Art überwunden werden.

Diese Aufgabe wird erfindungsgemäß dadurch gelöst, daß zumindest ein Teil des Kondensates vor seiner zumindest teilweisen Verdampfung als Rücklauf auf einen oberhalb der Eintrittsstelle des regenerierten Waschmittels gelegenen Abschnitt der Waschkolonne aufgegeben und noch oberhalb der Eintrittsstelle des regenerierten Waschmittels wieder abgezogen und dann dem Verdampfer zugeführt wird.

Auf diese Weise kann vermieden werden, daß das zur Waschmittelrückwaschung eingesetzte Kondensat sich im Absorber mit dem Waschmittel vermischt.

Mit der erfindungsgemäßen Verfahrensführung kann die Verdampfungsenthalpie für das Strippmedium bei niedrigerer Temperatur und damit thermodynamisch günstiger zugeführt werden. Während bei bisherigen Verfahren die Verdampfungsenthalpie bei der Temperatur des Säulensumpfes bereitgestellt werden mußte, weil das Kondensat mit dem beladenen Waschmittel vermischt war, wird erfindungsgemäß das reine Kondensat zumindest zum Teil verdampft und der Dampf als Strippmedium verwendet. Dabei muß die Verdampfungsenthalpie bei der Siedetemperatur des Kondensates, welche niedriger als die Sumpftemperatur ist, bereitgestellt werden.

Außerdem liegt die Temperatur im Regenerierabschnitt näher an der (als konstant angenommenen) Sumpftemperatur wodurch entweder weniger Strippdampf oder weniger Stoffübergangseinheiten im Regenerierabschnitt gebraucht werden.

Als besonders vorteilhaft hat es sich dabei erwiesen, wenn zumindest ein Teil des Kondensates z.B. 20—80%, vor seiner zumindest teilweisen Verdampfung als Rücklauf auf eine oberhalb der Eintrittsstelle des beladenen Waschmittels gelegenen Abschnitt der Regenerierkolonne aufgegeben und noch oberhalb der Eintrittsstelle des beladenen Waschmittels wieder abgezogen und dann dem Verdampfer zugeführt wird.

Zweckmäßigerweise wird die zumindest teilweise Verdampfung des Kondensates dabei durch Wärmetausch mit komprimiertem Dampf aus dem Kopf der Regenerierkolonne durchgeführt. Dabei wird bevorzugt der komprimierte Dampf vor Wärmeabgabe an das Kondensat als Wärmequelle für die Sumpfheizung der Regenerierkolonne verwendet. Diese Variante stellt insgesamt eine Kopplung des erfindungsgemäßen Verfahrens mit einer Wärmepumpe dar, wodurch der erforderliche Energieaufwand geringer wird.

Das erfindungsgemäße Verfahren läßt sich zur Regenerierung aller einschlägigen Waschmittel anwenden z.B. bei chemischen Wäschen, wie Heißpottasche, Monoethanolamin oder Diethanolamin, oder auch bei physikalischen Wäschen mit Polyethylenglykolethern oder Methanol, sowie bei Zwitterwäschen, wie mit einer Mischung aus Alkanolamin mit Methanol.

Im folgenden sei das erfindungsgemäße Verfahren anhand eines in zwei Figuren schematisch dargestellten Ausführungsbeispiels näher erläutert.

Es zeigen:

Figur 1 einfache Ausführung

Figur 2 Ausführung mit Einsatz einer Wärmepumpe.

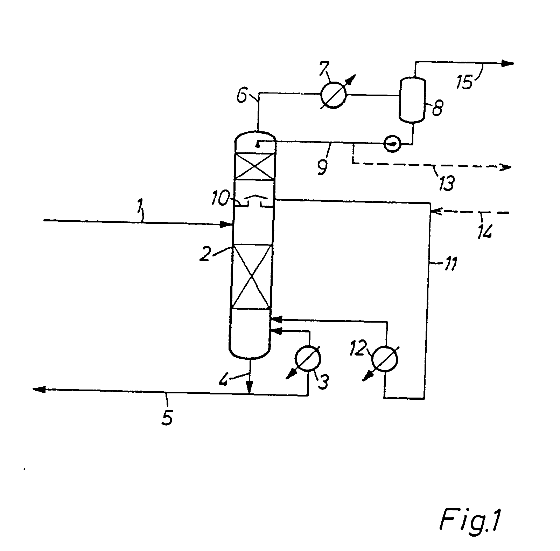

Gemäß Figur 1 wird über Leitung 1 beladenes Waschmittel herangeführt und in eine Regenerierkolonne 2 in der Mitte eingespeist. Die Kolonne 2 ist mit einer Sumpfheizung 3 und einem Kopfkondensator 7 ausgestattet. Nach Regenerierung des Waschmittels durch Strippen mit aus dem Sumpf aufsteigendem Dampf wird das Waschmittel über Leitung 4 abgezogen und zum einen Teil über die Sumpfheizung wieder zugeführt, während die Hauptmenge des regenerierten Waschmittels über Leitung 5 abgezogen und wieder einer Wäsche zugeführt wird.

Der Strippdampf, der die abgestrippten Komponenten enthält, verläßt die Kolonne 2 über Kopf durch Leitung 6, wird teilweise kondensiert 7 und dem Abscheider 8 zugefuhrt. Aus diesem wird über Leitung 15 das abgestrippte Gas und über Leitung 9 das Kondensat abgezogen, das als Rücklauf auf den oberen Kolonnenabschnitt aufgegeben wird.

Um eine Vermischung des Kondensates mit Waschmittel zu vermeiden, ist erfindungsgemäß im oberen Kolonnenabschnitt oberhalb der Eintrittsstelle des beladenen Waschmittels in die Kolonne ein Kaminboden 10 eingebaut, so daß das Kondensat über Leitung 11 oberhalb des Kaminbodens abgezogen werden kann. Nach Anwärmung und zumindest teilweiser Verdampfung 12 wird das Kondensat sodann im Sumpf wieder auf die Kolonne aufgegeben. Es werden beispielsweise mehr als 50%, vorzugsweise mehr als 80% des Kondensates verdampft.

Wie gestrichelt angedeutet ist, kann ein Teil des Kondensates aus Leitung 9 über eine Leitung 13 zum Absorber geführt werden, um dort ebenfalls zur Waschmittelrückwaschung zu dienen. Dieser Teilstrom wird nach Verwendung als Rücklauf im Absorber aus diesem abgezogen (nicht dargestellt) und über Leitung 14 dem aus der Kolonne 2 abgezogenen Kondensat in Leitung 11 vor Anwärmung und zumindest teilweiser Verdampffung 12 und Wiedereinführen in die Kolonne zugemischt.

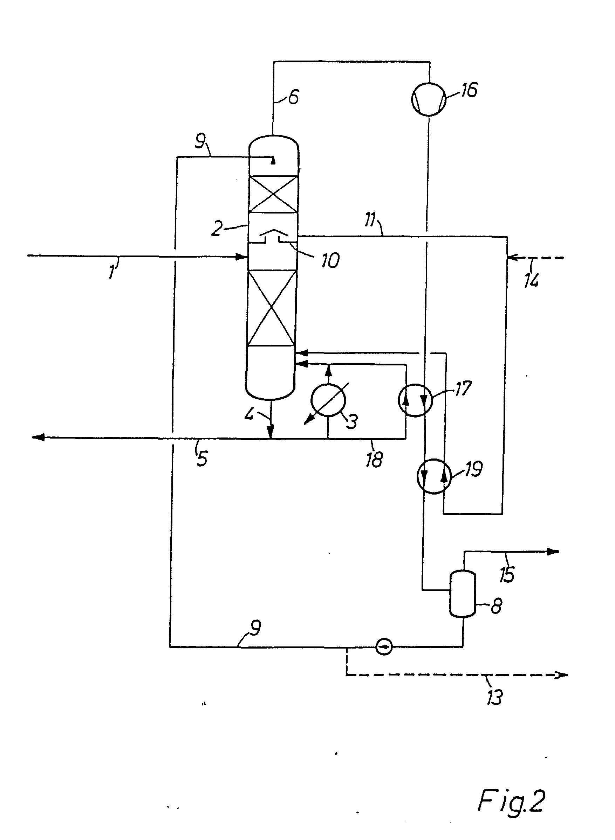

Im Ausführungsbeispiel der Figur 2 sind Anlagenteile, die mit dem Beispiel der Figur 1 übereinstimmen, mit gleichen Bezugszeichen versehen.

Über Leitung 1 strömen 900 m³/h Tetraethylenglykoldimethylether mit 95°C und 0,6 bar, das mit $SO_2$ beladen ist, aus dem Absorptionsteil einer Rauchgaswäsche heran und werden in die Regenerierkolonne 2 in der Mitte eingespeist. Aus dem beladenen Waschmittel werden mit 890 kmol/h Dampf die Verunreinigungen abgestrippt. Das regenerierte Waschmittel wird aus dem Sumpf über die Leitung 4 und 5 abgezogen und in den Absorptionsteil zurückgeführt.

Über Leitung 6 ziehen ca. 1000 kmol/h Dampf mit 70 kmol/h abgestrippten Gasen, insbesondere $SO_2$ und $CO_2$ mit einer Temperatur von 86°C und einem Druck von 0,6 bar ab. Der Dampf wird in 16 auf 1,6 bar verdichtet, im Wärmetauscher 17 gegen Waschmittel aus Leitung 18 auf 110°C sowie im Wärmetauscher 19 gegen anzuwärmendes und zumindest teilweise zu verdampfendes Kondensat aus Leitung 11 auf ca. 90°C abgekühlt und dem Abscheider 8 zugeführt. Aus diesem wird das kondensierte Wasser abgezogen und über Leitung 9 als Rücklauf auf die Kolonne 2 aufgegeben. Über Kopf des Abscheiders 8 ziehen über Leitung 15 ca. 120 kmol/h Restgas ab.

Aus der Kolonne 2 werden oberhalb des Kaminbodens 10 ca. 900 kmol/h Kondensat mit einer Temperatur von ca. 84°C abgezogen, im Wärmetauscher 19 zu etwa 90% verdampft und in den Sumpf der Kolonne 2 eingeführt.

Wie im Ausführungsbeispiel der Figur 1 kann auch gemäß Figur 2 über Leitung 13 ein Telstrom des Kondensates, z.B. 400 kmol/h als Rücklauf zum Absorber geführt und über Leitung 14 mit einer Temperatur von 25°C dem Kondensat aus Leitung 11 wider zugemischt werden.

**Patentansprüche**

1. Verfahren zur Regenerierung eines beladenen Waschmittels (1) in einer Regenerierkolonne (2) durch Strippen mit einem Dampf, bei dem nach Kondensation des Dampfes (6) in einem Kondensator (7) die abgestrippten Komponenten (15) abgezogen und das verbleibende Kondensat (9, 11) der Regenerierkolonne wieder zugeführt wird, wobei das Kondensat vor der Einspeisung in die Regenerierkolonne zumindest zum größten Teil wieder verdampft (12, 19) wird, dadurch gekennzeichnet, daß zumindest ein Teil des Kondensats (13) vor seiner zumindest teilweisen Verdampfung als Rücklauf auf einen oberhalb der Eintrittsstelle des regenerierten Waschmittels gelegenen Abschnitt einer Waschkolonne aufgegeben und noch oberhalb der Eintrittsstelle des regenerierten Waschmittels wieder abgezogen (14) und dann dem Verdampfer (12, 18) zugeführt wird.

2. Verfahren nach Anspruch 1, dadurch gekennzeichnet, daß zumindest ein Teil des Kondensats (9) vor seiner zumindest teilweisen Verdampfung als Rücklauf auf einen oberhalb der Eintrittsstelle des beladenen Waschmittels gelegenen Abschnitt der Regenerierkolonne (2) aufgegeben und noch oberhalb der Eintrittsstelle des beladenen Waschmittels wieder abgezogen (11) und dann dem Verdampfer (12, 19) zugeführt wird.

3. Verfahren nach einem der Ansprüche 1 oder 2, dadurch gekennzeichnet, daß die zumindest teilweise Verdampfung (12, 19) des Kondensats (11) durch Wärmetausch mit komprimiertem (16) Dampf (6 aus dem Kopf der Regeneriersäule (2) durchgeführt wird.

4. Verfahren nach einem der Ansprüche 1 bis 3, dadurch gekennzeichnet, daß der komprimierte Dampf (6) vor Wärmeabgabe an das Kondensat (11) als Wärmequelle für die Sumpfheizung (17) der Regenerierkolonne (2) verwendet wird.

5. Verfahren nach Anpruch 4, dadurch gekennzeichnet, daß der komprimierte Dampf (6) vom Kopf der Regeneriersäule (2) im Wärmetausch mit in der Regeneriersäule zurückzuleitendem Waschmittel (18) sowie mit dem Kondensat (11) abgekühlt (17, 198) und anschließend einer Phasentrennung (8) unterzogen wird, und das dabei erhaltene Kondensat (9) auf den Kopf der Regeneriersäule (2) aufgegeben wird.

6. Verfahren nach einem der Ansprüche 1 bis 5, dadurch gekennzeichnet, daß zwischen 30 und 100% des Kondensats (11) wieder verdampft werden.

7. Verfahren nach einem der Ansprüche 1 bis 6, dadurch gekennzeichnet, daß zwischen 20 und 100% des Kondensats (11) auf die Waschsäule aufgegeben werden.

**Revendications**

1. Procédé de régénération d'un agent de lavage (1) chargé d'impuretés dans une colonne de régénération (2) par entraînement à l'aide de vapeur, dans lequel, après condensation de la vapeur (6) dans un condenseur (7), les composants entraînés (15) sont soutirés et le condensat résiduel (9, 11) est retourné vers la colonne de régénération, le condensat, préalablement à son introduction dans la colonne de régénération, étant au moins en plus grande partie soumis à une nouvelle évaporation (12, 19), caractérisé en ce qu'au moins une partie du condensat (13), avant son évaporation au moins partielle, est utilisée comme reflux dans une section de la colonne de lavage située au-dessus du point d'admission de l'agent de lavage de régénéré, puis est soutirée à nouveau (14) au-dessus du point d'admission de l'agent de lavage régénéré et est retournée à l'évaporateur (12, 18).

2. Procédé de régénération selon la revendication 1, caractérisé en ce qu'au moins une partie du condensat (9) est introduite comme reflux, avant son évaporation au moins partielle, dans le section de la colonne de régénération (2) située au-dessus du point d'admission de l'agent de lavage chargé d'impuretés puis est soutirée (11) également au-dessus du point d'admission de l'agent de lavage chargé d'impuretés, puis amenée à l'évaporateur (12, 19).

3. Procédé selon l'une des revendications 1 ou 2, caractérisé en ce que l'évaporation (12, 19) au moins partielle du condensat (11) est produite par un échange de chaleur avec de la vapeur (6) comprimée (16) issue de la tête de la colonne de régénération (2).

4. Procédé selon l'une des revendications 1 à 3, caractérisé en ce que la vapeur (6) comprimée, est utilisée avant fourniture de chaleur au condensat (11) comme source de chaleur pour le chauffage de la curve (17) de la colonne de régénération (2).

5. Procédé selon la revendication 4, caractérisé en ce que la vapeur comprimée (6) de la tête de la colonne de régénération (2) est refroidie par échange (17, 19) de chaleur avec l'agent de lavage (18) retournant dans la colonne de régénération, ainsi qu'avec le condensat (11), puis est soumise à une séparation de phase (8), et en ce que le condensat (9) obtenu est retourné en tête de la colonne de régénération (2).

6. Procédé selon l'une des revendications 1 à 5, caractérisé en ce que de 30 à 100% du condensat (11) s'évapore à nouveau.

7. Procédé selon l'une des revendications 1 à 6, caractérisé en ce que 20 à 100% du condensat (11) est introduite dans la colonne de lavage.

**Claims**

1. A process for the regeneration of a charged scrubbing agent (1) in the regenerating column (2) by stripping with a vapour, wherein the vapour (6) has condensed in a condenser (7) the stripped components (15) are discharged and the remaining condensate (9, 11) is returned to the regenerating column, where the condensate, before being fed into the regenerating column, is vaporised again at least in the majority (12, 19), characterised in that at least a part of the condensate (13), before its at least partial vaporisation, is fed as return flow to a section of a scrubbing column located above the input point of the regenerated scrubbing agent and, again above the input point of the regenerated scrubbing agent, is discharged again (14) and then fed to the vaporiser (12, 18).

2. A process as claimed in claim 1, characterised in that at least a part of the condensate (9), before its at least partial vaporisation, is fed as return flow to a section of the regenerating column (2) located above the input point of the charged scrubbing agent and again above the input point of the charged scrubbing agent, is discharged again (11) and then fed to the vaporiser (12, 19).

3. A process as claimed in one of the claims 1 or 2, characterised in that the at least partial vaporisation (12, 19) of the condensate (11) is carried out by heat exchange with compressed (16) vapour (6) from the head of the regenerating column (2).

4. A process as claimed in one of the claims 1 to 3, characterised in that the compressed vapour (6) is used as heat source for the sump heating (17) of the regenerating column (2) before the heat is transferred to the condensate (11).

5. A process as claimed in claim 4, characterised in that the compressed vapour (16) from the head of the regenerating column (2) is cooled (17, 19) with scrubbing agent (18) to be returned to the regenerating column and with the condensate (11) and is then subjected to phase separation (8) and the condensate (9) thereby obtained is fed to the head of the regenerating column ().

6. A process as claimed in one of the claims 1 to 5, characterised in that between 30% and 100% of the condensate (11) is revaporised.

7. A process as claimed in one of the claims 1 to 6, characterised in that between 20% and 100% of the condensate (11) is fed to the scrubbing column.

Fig.1

Fig.2